# EUROPEAN PATENT APPLICATION

(11) **EP 2 902 194 A1**
(43) Date of publication of application: **05.08.2015**
(21) Application number: 13842164.9
(22) Date of filing: 27.09.2013
(51) Int. Cl.: B32B 27/32, B32B 5/18

(54) **LAMINATE SHEET AND FOAMED LAMINATE SHEET**

(30) Priority: 27.09.2012 JP 2012215214
(71) Applicant: Dai Nippon Printing Co., Ltd., Tokyo 162-8001 (JP)
(72) Inventor: YAMAUCHI, Satoshi, Tokyo 162-8001 (JP); KURODA, Seiji, Tokyo 162-8001 (JP); FUJII, Koki, Tokyo 162-8001 (JP)
(74) Representative: Müller-Boré & Partner Patentanwälte PartG mbB
(86) International application number: PCT/JP2013/076254
(87) International publication number: WO 2014/051047

(57) **Abstract**

An object of the present invention is to provide a foamed laminate sheet that has practical surface strength and excellent background following properties even when an olefin-based resin is used as a resin component of a foamed resin layer, and a laminate sheet (unfoamed material) useful for producing the foamed laminate sheet.

A laminate sheet comprising at least a foaming-agent-containing resin layer on a substrate,
(1) the foaming-agent-containing resin layer comprising an ethylene copolymer, and an olefin copolymer comprising at least an α,β unsaturated carboxylic acid anhydride as a constituent monomer,
(2) the ethylene copolymer being at least one member selected from the group consisting of ethylene-α,β unsaturated carboxylic acid ester copolymers and ethylene-carboxylic acid vinyl ester copolymers, and
(3) the foaming-agent-containing resin layer being crosslinked.

## Description

### Technical Field

The present invention relates to a laminate sheet and a foamed laminate sheet. The foamed laminate sheet comprises a foamed resin layer, and is useful for applications such as foamed wallpaper and various decorative materials. The laminate sheet refers to a foamed laminate sheet in a pre-foamed condition, i.e., a so-called unfoamed material.

### Background Art

Foamed wallpaper in which a foamed resin layer that contains an olefin-based resin having no halogen is formed on a paper substrate (backing paper) has been known. In particular, foamed wall paper that uses an ethylene-vinyl acetate copolymer (EVA) as an olefin-based resin having no halogen has been widely known.

Compared to foamed wallpaper containing a foamed resin layer having a vinyl chloride resin, foamed wallpaper comprising a foamed resin layer containing an olefin-based resin having no halogen is environmentally friendly, but has poor surface strength. Thus, such foamed wallpaper requires a means for providing surface strength. A method for reducing the expansion ratio of a foamed resin layer is one example thereof.

However, such a method cannot hide background unevenness during application.

As a method that improves the above problem and produces foamed wallpaper having excellent surface strength, Patent Literature 1 suggests foamed wallpaper containing, as a foamed resin layer, a layer formed of an ethylene-methacrylic acid copolymer (EMAA)-containing resin composition.

Such foamed wallpaper, however, has poor ductility and malleability due to cohesion specific to EMAA resin. Accordingly, the following properties (background following properties) with respect to the gap or difference of a background, which is caused by the secular change or shaking of a building after the application of foamed wallpaper, are insufficient, allowing cracking to easily occur.

### Citation List

### Patent Literature

PTL 1: JP2008-156811A

### Summary of Invention

### Technical Problem

An object of the present invention is to provide a foamed laminate sheet that has practical surface strength and excellent background following properties even when an olefin-based resin is used as a resin component of a foamed resin layer, and a laminate sheet (unfoamed material) useful for producing the foamed laminate sheet.

### Solution to Problem

As a result of extensive research, the present inventors found that the above object can be achieved by a laminate sheet comprising a crosslinked foaming-agent-containing layer having a specific resin component, and a foamed laminate sheet obtained by foaming the foaming-agent-containing resin layer. The present inventors thereby accomplished the present invention.

Specifically, the present invention relates to the following laminate sheet and foamed laminate sheet.
1. A laminate sheet comprising at least a foaming-agent-containing resin layer on a substrate,
   (1) the foaming-agent-containing resin layer comprising an ethylene copolymer, and an olefin copolymer comprising at least an α,β unsaturated carboxylic acid anhydride as a constituent monomer,
   (2) the ethylene copolymer being at least one member selected from the group consisting of ethylene-α,β unsaturated carboxylic acid ester copolymers and ethylene-carboxylic acid vinyl ester copolymers, and
   (3) the foaming-agent-containing resin layer being crosslinked.
2. The laminate sheet according to Item 1, wherein the ethylene copolymer is contained in an amount of 50 to 80 mass% and the olefin copolymer is contained in an amount of 20 to 50 mass% in 100 mass% of resin components of the foaming-agent-containing resin layer.
3. The laminate sheet according to Item 1 or 2, wherein a comonomer component other than ethylene in the ethylene copolymer is at least one member selected from the group consisting of vinyl acetate, methyl acrylate, and methyl methacrylate.
4. The laminate sheet according to any one of Items 1 to 3, wherein the foaming-agent-containing resin layer is crosslinked by electron beam irradiation.
5. The laminate sheet according to any one of Items 1 to 4, wherein a non-foamed resin layer B, the foaming-agent-containing resin layer, and a non-foamed resin layer A are formed on the substrate in this order.
6. A foamed laminate sheet obtained by foaming the foaming-agent-containing resin layer of the laminate sheet according to any one of Items 1 to 5.
7. The foamed laminate sheet according to Item 6, wherein embossing is done from an uppermost surface layer.

The laminate sheet and the foamed laminate sheet of the present invention are explained in detail below.

### Laminate Sheet

The laminate sheet of the present invention is a laminate sheet comprising at least a foaming-agent-containing resin layer on a substrate, and has features such that
(1) the foaming-agent-containing resin layer comprises an ethylene copolymer, and an olefin copolymer comprising at least an α,β unsaturated carboxylic acid anhydride as a constituent monomer,
(2) the ethylene copolymer is at least one member selected from the group consisting of ethylene-α,β unsaturated carboxylic acid ester copolymers and ethylene-carboxylic acid vinyl ester copolymers, and
(3) the foaming-agent-containing resin layer is crosslinked.

Since the laminate sheet of the present invention having the above features comprises a specific ethylene copolymer and a specific olefin copolymer as the resin components of the foaming-agent-containing resin layer, and the foaming-agent-containing resin layer is crosslinked, a foamed laminate sheet having practical surface strength and excellent background following properties can be obtained even when an olefin-based resin is used as a resin component of the foamed resin layer.

Each layer of the laminate sheet is explained below.

### Substrate

The substrate is not limited, and known fibrous substrates (backing paper) and the like may be used.

Specific examples thereof include paper that is ordinarily used for general wallpaper base (obtained by treating a sheet mainly formed from pulp with a sizing agent); flame-retardant paper (obtained by treating a sheet mainly formed from pulp with a flame retardant such as guanidine sulfamate or guanidine phosphate); inorganic paper comprising inorganic additives, such as aluminium hydroxide and magnesium hydroxide; fine-quality paper; thin paper; fiber-mixed paper (in which pulp and synthetic fiber are mixed and made into paper); and the like.

The basis weight of the substrate is not limited, and is preferably about 50 to 300 g/m², and more preferably about 50 to 120 g/m².

### Foaming-Agent-Containing Resin Layer

The foaming-agent-containing resin layer used in the present invention comprises (i) a specific ethylene copolymer and (ii) an olefin copolymer comprising at least an α,β unsaturated-carboxylic-acid anhydride as a constituent monomer.

The ethylene copolymer (i) is at least one member selected from the group consisting of ethylene-α,β unsaturated carboxylic acid ester copolymers and ethylene-carboxylic acid vinyl ester copolymers. That is, the monomer component (the so-called comonomer component) other than ethylene in the ethylene copolymer is at least one member selected from the group consisting of α,β unsaturated carboxylic acid esters and carboxylic acid vinyl esters. The comonomer component other than ethylene is preferably at least one member selected from the group consisting of vinyl acetate, methyl acrylate, and methyl methacrylate.

The ethylene copolymers can be used singly, or in a combination of two or more. The ethylene copolymer may be a polymer having two types of monomers, or a polymer having three or more types of monomers.

When the ethylene copolymer is a polymer having two types of monomers, it is preferably at least one member selected from the group consisting of ethylene-vinyl acetate copolymers (EVA), ethylene methyl acrylate copolymers (EMA), ethylene ethyl acrylate copolymers (EEA), ethylene-methyl methacrylate copolymers (EMMA), and ethylene ethyl methacrylate copolymers (EEMA); and more preferably at least one member selected from the group consisting of ethylene-vinyl acetate copolymers (EVA), ethylene methyl acrylate copolymers (EMA), and ethylene methyl methacrylate copolymers (EMMA).

The amount of the ethylene copolymer is preferably 50 to 80 mass% in 100 mass% of resin components of the foaming-agent-containing resin layer. When the amount of the ethylene copolymer falls within the above range, more excellent foamability and practical surface strength can be obtained together with excellent background following properties. Excellent background following properties indicate that the foamed wallpaper can follow the gap or difference of a background caused by the secular change or shaking of a building after the application of foamed wallpaper; accordingly, cracking is not likely to occur.

The amount of the comonomer component other than ethylene in the ethylene copolymer is preferably 15 to 25 mass%. The practical surface strength and excellent background following properties can be obtained by employing such a copolymerization ratio.

As described above, the present invention comprises, as resin components of the foaming-agent-containing resin layer, (i) an ethylene copolymer as described above together with (ii) an olefin copolymer comprising at least an α,β unsaturated-carboxylic-acid anhydride (hereinbelow sometimes referred to as "unsaturated carboxylic acid anhydride copolymer") as a constituent monomer. Examples of the unsaturated carboxylic acid anhydride copolymer include i) a resin obtained by polymerizing an olefin-based monomer and at least an α,β unsaturated carboxylic acid anhydride as comonomers, and ii) a resin obtained by graft polymerizing at least an α,β unsaturated carboxylic acid anhydride to an olefin copolymer comprising an olef in-based monomer as a constituent monomer. The unsaturated carboxylic acid anhydride copolymers can be used singly, or in a combination of two or more.

The olefin-based monomer is not particularly limited, and examples thereof include C₂₋₁₂ olefins, and preferably C₂₋₈ olefins. Specific examples of the olefin-based monomer used for the olefin-based resin include olefins such as ethylene, propylene, 1-butene, 1-pentene, 1-hexene, 4-methyl pentene-1,1-octene, 1-decene, and 1-dodecen. Of the olefin-based monomers, ethylene is preferable. These olefin-based monomers can be used singly, or in a combination of two or more.

The α,β unsaturated carboxylic acid anhydride may be a mixed acid anhydride in which two different types of unsaturated carboxylic acids are dehydrated, a symmetrical acid anhydride in which two molecules of the same type of unsaturated carboxylic acid are dehydrated, or an intramolecular cyclic anhydride in which two carboxyl groups are dehydrated in an unsaturated carboxylic acid molecule having the two carboxyl groups; and an intramolecular cyclic anhydride of unsaturated carbonic acid is preferable. Specific examples include maleic anhydride, itaconic acid anhydride, citraconic acid anhydride, and the like.

The amount of the unsaturated carboxylic acid anhydride copolymer is preferably 20 to 50 mass% in 100 mass% of resin components of the foaming-agent-containing resin layer. When the amount of the unsaturated carboxylic acid anhydride copolymer falls within the above range, more excellent foamability and practical surface strength can be obtained together with excellent background following properties.

The unsaturated carboxylic acid anhydride copolymer may contain other copolymer components. Examples thereof include acrylic acid esters such as methyl acrylate, ethyl acrylate, butyl acrylate, methyl methacrylate, ethyl methacrylate, and butyl methacrylate; maleic acid esters such as dimethyl maleate, diethyl maleate, and dibutyl maleate; acrylic acid amides; alkyl vinyl ethers such as methylvinyl ether and ethylvinyl ether; vinyl esters such as vinyl formate, vinyl acetate, vinyl propionate, vinyl pivalate, and vinyl versatate; vinyl alcohols obtained by saponifying vinyl esters with a basic compound, etc.; other dienes; acrylonitrile; vinyl halides; vinylidene halides; carbon monoxide; sulfur dioxide; and the like. Mixtures of these components can also be used. Of these, acrylic acid esters and methacrylic acid esters are more preferable.

Examples of the unsaturated carboxylic acid anhydride copolymer in the present invention include ethylene-methyl acrylate-maleic anhydride copolymers (EMAMAH), ethylene-ethyl acrylate-maleic anhydride copolymers, ethylene-methyl methacrylate-maleic anhydride copolymers, and the like.

As the resin composition for forming a foaming-agent-containing resin layer, resin compositions containing the resin components, an inorganic filler, a pigment, a heat decomposition-type foaming agent, a foaming auxiliary, etc., are suitably used. In addition to the above, a stabilizer, a lubricant, and other additives may be used.

Examples of the heat decomposition-type foaming agent include azo-based agents, such as azodicarbonamide (ADCA) and azobisformamide; hydrazide-based agents, such as oxybenzene sulfonylhydrazide (OBSH) and para-toluenesulfonyl hydrazide. The amount of the heat decomposition-type foaming agent may be suitably selected depending on the type of foaming agent, expansion ratio, and other factors. The expansion ratio is 3 times or more, preferably 5 times or more, more preferably 7 times or more, and even more preferably about 7 to 10 times. The amount of the heat decomposition-type foaming agent is preferably about 1 to 20 parts by mass per 100 parts by mass of resin components.

As the foaming auxiliary, metal oxides and/or fatty acid metal salts are preferable. Usable examples thereof include zinc stearate, calcium stearate, magnesium stearate, zinc octoate, calcium octoate, magnesium octoate, zinc laurate, calcium laurate, magnesium laurate, zinc oxide, and magnesium oxide. The amount of the foaming auxiliary is preferably about 0.3 to 10 parts by mass, and more preferably about 1 to 5 parts by mass per 100 parts by mass of resin components. The foaming auxiliaries can be used singly, or in a combination of two or more.

Examples of usable inorganic fillers include calcium carbonate, aluminum hydroxide, magnesium hydroxide, antimony trioxide, zinc borate, molybdenum compound, and the like. By including an inorganic filler, effects such as gap control and surface property improvement can be achieved. The amount of the inorganic filler is preferably about 0 to 100 parts by mass, and more preferably 20 to 70 parts by mass per 100 parts by mass of resin components.

As for pigments, inorganic pigments include, for example, titanium oxide, zinc flower, carbon black, black iron oxide, yellow iron oxide, chrome yellow, molybdate orange, cadmium yellow, nickel titan yellow, chromium titan yellow, iron oxide (red iron oxide), cadmium red, ultramarine blue, Prussian blue, cobalt blue, chrome oxide, cobalt green, aluminium powder, bronze powder, mica titan, and zinc sulfide. Organic pigments include, for example, aniline black, perylene black, azo-based pigments (e.g., azo-lake, insoluble azo, and condensed azo), and polycyclic pigments (e.g., isoindolinone, isoindoline, quinophthalone, perinone, flavanthrone, anthrapyrimidine, anthraquinone, quinacridone, perylene, diketopyrrolopyrrole, dibromo anthanthrone, dioxazine, thioindigo, phthalocyanine, indanthrone, and halogenated phthalocyanine). The amount of the pigment is preferably about 10 to 50 parts by mass, and more preferably 15 to 30 parts by mass per 100 parts by mass of resin components.

In the present invention, the foaming-agent-containing resin layer is crosslinked. Since the foaming-agent-containing resin layer is crosslinked, a foamed laminate sheet having excellent background following properties can be obtained. Such an effect is obtained presumably because (1) the foaming-agent-containing resin layer is pseudo-polymerized by resin crosslinking, and (2) (when the foaming-agent-containing resin layer contains a filler such as an inorganic filler or a pigment described above) interface adhesion occurring between the filler and the resin in the foaming-agent-containing resin layer is improved by resin crosslinking.

Examples of the method for crosslinking the foaming-agent-containing resin layer include (1) irradiation of the foaming-agent-containing resin layer by ionizing radiation; (2) incorporation of a crosslinking agent into the foaming-agent-containing resin layer; etc. Ionizing radiation refers to electromagnetic waves or charged particles with an energy quantum capable of polymerizing and crosslinking molecules, and an ultraviolet ray, electron beam, etc., can be generally used. Usable examples of the ultraviolet ray source include light sources such as ultra-high-pressure mercury lamps, high-pressure mercury lamps, low-pressure mercury lamps, carbon arc lamps, black lights, metal halide lamps, and the like. Usable examples of the electron beam source include various types of electron beam accelerators such as Cockcroft-Walton accelerators, Van de Graaff accelerators, resonant transformer-type accelerators, insulated core transformer-type accelerators, linear accelerators, dynamitron accelerators, and high-frequency-type accelerators.

Of the methods for crosslinking the foaming-agent-containing resin layer, a method for irradiating an electron beam is preferable since the unsaturated-carboxylic-acid polymer, which is a resin component of the foaming-agent-containing resin layer, is easily crosslinked by electron beam irradiation, thus attaining more significant improvement in background following properties.

The method for irradiating a foaming-agent-containing resin layer with an electron beam, and the method for foaming the foaming-agent-containing resin layer are performed according to the methods described in the production method below.

The relationship between the resin crosslinking method and the amounts of the ethylene copolymer and the unsaturated carboxylic acid anhydride copolymer is preferably such that the crosslinking is performed by electron beam irradiation based on the amounts of the ethylene copolymer and the unsaturated carboxylic acid anhydride copolymer being respectively 50 to 80 mass% and 20 to 50 mass% in 100 mass% of resin components of the foaming-agent-containing resin layer. By performing crosslinking by electron beam irradiation while determining the amounts of the ethylene copolymer and the unsaturated carboxylic acid anhydride copolymer within the above range, more excellent foamability and practical surface strength can be obtained together with excellent background following properties.

As a crosslinking agent, a known radical-generating agent that is decomposed by heating to generate free radical, thus forming crosslinking binding between molecules or in a molecule can be used. Examples of the crosslinking agent include dicumyl peroxide, 1,1-di-tertiary-butyl peroxy-3,3,5-trimethyl cyclohexane, 2,5-dimethyl-2,5-di-tertiary-butyl peroxyhexane, 2,5-dimethyl-2,5-di-tertiary-butyl peroxyhexyne, 1,3-bis(tertiary butylperoxy isopropyl)benzene, tertiarybutyl peroxy ketone, tertiarybutyl peroxy benzoate, and like organic peroxides. These crosslinking agents can be used singly, or in a combination of two or more.

Although the amount of the crosslinking agent is not limited, it is preferably 0.1 to 2 parts by mass, and more preferably 0.1 to 1.5 parts by mass per 100 parts by mass of resin components of the foaming-agent-containing resin layer.

The foaming-agent-containing resin layer may include a crosslinking auxiliary. Examples of the crosslinking auxiliary include polyunsaturated compounds such as polyallyl compounds and poly (meta)acryloxy compounds. Examples thereof include polyaryl compounds such as triallyl isocyanurate, triallyl cyanurate, diaryl phthalate, diallyl fumarate, and diallyl maleate; poly(meth)acryloxy compounds such as ethylene glycol diacrylate, ethylene glycol dimethacrylate, and trimethylolpropanetrimethacrylate; divinylbenzene; and the like. These crosslinking auxiliaries can be used singly, or in a combination of two or more.

Although the amount of the crosslinking auxiliary is not limited, it is preferably 10 parts by mass or less, and more preferably 0.1 to 3 parts by mass per 100 parts by mass of the resin components of the foaming-agent-containing resin layer.

The thickness of the foaming-agent-containing resin layer is preferably about 40 to 100 µm, and the thickness of the foamed resin layer obtained after foaming is preferably about 300 to 700 µm.

The resin components contained in the foaming-agent-containing resin layer of the present invention preferably have a melt flow rate (MFR) of 10 to 35 g/10 min, which is measured under the conditions according to JIS K 6922, i.e., at 190°C and a load of 21.18 N. When the MFR falls within the above range, the foaming-agent-containing resin layer can be formed into a film by extrusion with little increase in temperature. This makes it possible to obtain a film in a pre-foamed condition; therefore, if a picture pattern layer is formed in a latter step, printing can be formed on a smooth surface, decreasing pattern defects, etc. When the MFR is unduly large, the resin becomes undesirably soft, which may cause insufficient scratch resistance of the resulting foamed resin layer.

### Non-Foamed Resin Layers A and B

The foaming-agent-containing resin layer may have a non-foamed resin layer on one side or both sides of the foaming-agent-containing resin layer.

For example, a non-foamed resin layer B (adhesion resin layer) may be formed on the back surface of the foaming-agent-containing resin layer (the surface on which the substrate is placed) for the purpose of improving adhesion with the substrate.

The resin component of the adhesion resin layer is not particularly limited, and an ethylene-vinyl acetate copolymer (EVA) is preferable. Known or commercially available EVA can be used. In particular, EVA having an acetic acid vinyl component (VA component) of 10 to 46 mass% is preferable, and EVA having an acetic acid vinyl component of 15 to 41 mass% is more preferable.

Although the thickness of the adhesion resin layer is not limited, it is preferably about 5 to 50 µm.

A non-foamed resin layer A may be formed on the upper surface of the foaming-agent-containing resin layer for the purpose of making the picture pattern clear when a picture pattern layer is formed, and improving the scratch resistance of the foamed resin layer.

Examples of the resin component of the non-foamed resin layer A include polyolefin-based resins, methacryl-based resins, thermoplastic polyester-based resins, polyvinyl alcohol-based resins, fluorine-based resins, and the like. Of these, polyolefin-based resins are preferable.

As a polyolefin-based resin, at least one member selected from simple resins such as polyethylene (PE), polypropylene, polybutene, polybutadiene, and polyisoprene; copolymers of ethylene and an α-olefin having 4 or more carbon atoms (linear low-density polyethylenes); ethylene (meth)acrylic acid-based copolymer resins such as ethylene acrylic acid copolymer resins and ethylene meth acrylic acid copolymer resins; ethylene(meth)acrylic acid ester-based copolymer resins such as ethylene methyl acrylate copolymer resins and ethylene ethyl acrylate copolymer resins; ethylene-vinyl acetate copolymers (EVA); saponified products of ethylene-vinyl acetate copolymer resins; ionomers; and the like. The term "(meth)acryl" indicates acryl or methacryl. The same applies to the other portions indicating "meth."

Although the thickness of the non-foamed resin layer A is not limited, it is preferably about 3 to 50 µm, and particularly preferably about 5 to 20 µm.

In the present invention, an embodiment wherein the non-foamed resin layer B, the foaming-agent-containing resin layer, and the non-foamed resin layer A are formed on the substrate in this order is preferable from the viewpoint of production, which is described below.

### Picture Pattern Layer

A picture pattern layer may be formed on the foaming-agent-containing resin layer (or non-foamed resin layer A).

The picture pattern layer gives the resin laminate a design. Examples of usable picture patterns include wood grain patterns, marble grain patterns, pebbly patterns, tiled patterns, brick-masonry patterns, textile patterns, tie-dyed leather patterns, geometric figures, characters, symbols, and abstraction patterns. The picture pattern layer can be suitably selected depending on the type of foamed wallpaper.

The picture pattern layer may be formed by printing picture patterns. Examples of the printing methods include gravure printing, flexo printing, silk screen printing, and offset printing. Usable printing inks include those that comprise a colorant, a binding resin, and a solvent. These inks may be known or commercially available ones.

As the colorant, the pigments used for the foaming-agent-containing resin layer may be suitably used.

The binding resin may be suitably selected depending on the type of the substrate sheet. Examples thereof include acrylic-based resins, styrene-based resins, polyester-based resins, urethane-based resins, chlorinated-polyolefin-based resins, vinyl chloride-vinyl acetate copolymer-based resins, polyvinyl butyral resins, alkyd-based resins, petroleum-based resins, ketone resins, epoxy-based resins, melamine-based resins, fluorine-based resins, silicone-based resins, cellulose derivatives, rubber-based resins, and the like.

Examples of the solvent (or dispersion medium) include petroleum-based organic solvents, such as hexane, heptane, octane, toluene, xylene, ethylbenzene, cyclohexane, and methylcyclohexane; ester-based organic solvents, such as ethyl acetate, butyl acetate, acetic acid-2-methoxy ethyl, and acetic-acid-2-ethoxyethyl; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; water; and the like. These solvents (or dispersion media) can be used singly, or in a mixed condition.

The thickness of the picture pattern layer depends on the type of the picture pattern. In general, about 0.1 to 10 µm is preferable.

### Surface Protective Layer (Overcoat Layer)

In the present invention, a surface protective layer is formed on the surface of the foaming-agent-containing resin layer or the picture pattern layer for luster control and/or picture pattern protection purposes.

The type of the surface protective layer is not limited. The surface protective layer for a luster control purpose is, for example, a surface protective layer containing a known filler such as silica. The surface protective layer is formed by a known method such as gravure printing. If sufficient adhesion cannot be obtained between the picture pattern layer and the surface protective layer, the surface protective layer can be formed after the surface of the picture pattern layer is subjected to easy-adhesion treatment (primer treatment).

To form the surface protective layer for the purpose of enhancing surface strength (scratch resistance, etc.) and stain resistance of the laminate sheet or a foamed laminate sheet described below, and protection of a picture pattern layer, a surface protective layer containing an ionizing radiation-curable resin as a resin component is preferably used. The ionizing radiation-curable resin may be preferably radically polymerized (cured) by electron beam irradiation.

The thickness of the surface protective layer is not limited, and is preferably about 0.1 to 15 µm.

### Foamed Laminate Sheet

The foamed laminate sheet of the present invention can be obtained by foaming the foaming-agent-containing resin layer of the laminate sheet. The heating conditions during foaming are not limited as long as a foamed resin layer is formed by decomposing a heat decomposition-type foaming agent. The heating temperature is preferably about 210 to 240°C, and the heating time is preferably about 20 to 80 seconds.

In the foamed laminate sheet of the present invention, embossing may be performed from the uppermost surface layer. Embossing can be performed by known means, such as embossing plates and embossing rolls. For example, when the uppermost surface layer is a protective layer, the surface resin layer is softened by heating, and then pressed using embossing means to form a desired embossed pattern. Examples of the embossed pattern include wood grain vessel channel patterns, stone sheet surface concave-convex patterns, textile surface textures, mat patterns, grain patterns, hairline patterns, linear streak patterns, and the like.

### Method for Producing Foamed Laminate Sheet

The foamed laminate sheet can be formed by a method in which after a picture pattern layer is formed on a substrate and a foaming-agent-containing resin layer, a surface protective layer is formed on the picture pattern layer to form a laminate sheet, and the laminate sheet is subsequently heat-treated to make a foaming-agent-containing resin layer a foamed resin layer.

When a non-foamed resin layer is formed on one side or both sides of the foaming-agent-containing resin layer, the film is preferably formed by co-extrusion using a T-die extruder. For example, when the non-foamed resin layer is formed on both sides, a multi-manifold type T-die that is capable of simultaneously forming three layers by co-extruding melting resins corresponding to the three layers can be used.

When the resin composition for forming the foaming-agent-containing resin layer contains an inorganic filler, and the foaming-agent-containing resin layer is formed by extrusion, residue (so-called die drool) of the inorganic filler is likely to develop at the extrusion port (so-called die) of the extruder, which is likely to become foreign matter on the surface of the foaming-agent-containing resin layer. Accordingly, when the inorganic filler is contained in the resin composition for forming the foaming-agent-containing resin layer, it is preferable to form the three layers by co-extrusion as described above. Specifically, by co-extruding the layers in a manner such that the foaming-agent-containing resin layer is sandwiched between the non-foamed resin layers, occurrence of the die drool can be inhibited.

When electron beam irradiation is performed after formation of the foaming-agent-containing resin layer, the resin components are crosslinked to adjust the surface strength, foamability, etc., of the foamed resin layer. The energy of the electron beam is preferably about 150 to 250 kV, and more preferably about 175 to 200 kV. The irradiation amount is preferably about 10 to 100 kGy, and more preferably about 10 to 50 kGy. A known electron beam irradiation device can be used as an electron beam source. Electron beam irradiation may be performed after the formation of a picture pattern layer or a surface protective layer.

If necessary, a picture pattern layer and a surface protective layer are sequentially laminated on the foaming-agent-containing resin layer. The layers can be laminated by combining coating such as printing and application, with extrusion. Coating such as printing and application can be performed according to a usual method.

Subsequently, a foamed resin layer is formed by heating the foaming-agent-containing resin layer. The heating conditions are not limited as long as a foamed resin layer is formed by decomposing a heat decomposition-type foaming agent. The heating temperature is preferably about 210 to 240°C, and the heating time is preferably about 20 to 80 seconds.

The foamed laminate sheet of the present invention can be used for applications such as foamed wallpaper, various decorative materials, skin materials for lamination decorative sheets, cushioning floorings, and heat insulation decorative sheets.

### Advantageous Effects of Invention

Since the laminate sheet of the present invention comprises a specific ethylene copolymer and a specific olefin copolymer as the resin components of the foaming-agent-containing resin layer, and the foaming-agent-containing resin layer is crosslinked, a foamed laminate sheet having practical surface strength and excellent background following properties can be obtained even when an olefin-based resin is used as a resin component of a foamed resin layer.

### Description of Embodiments

The present invention is explained in detail below with reference to the Examples and Comparative Examples. However, the present invention is not limited to the examples.

### Example 1

An ethylene-vinyl acetate copolymer (EVA), an ethylene-methyl acrylate-maleic anhydride copolymer (EMAMAH), and other materials for a foaming-agent-containing resin layer were melted and kneaded in the formulation shown below to form a film having a thickness of 100 µm. The film was applied to backing paper.

Subsequently, electron beam irradiation was performed under conditions of 200 kV and 35 kGy.

Next, a surface protective layer was formed by applying an acryl-based aqueous emulsion (produced by Dainichiseika Color & Chemicals Mfg. Co., Ltd.) on the foaming-agent-containing resin layer by using a gravure printer. Heating was performed in a gear oven (220°C x 35 seconds) to foam the foaming-agent-containing resin layer, thus obtaining a desired foamed laminate sheet (foamed wallpaper).

### Foaming-Agent-Containing Resin Composition

- EVA (Evaflex EV450, produced by Mitsui/Du Pont Polychemical K.K.): 65 parts by mass
- EMAMAH (Rexpearl ET440H, produced by Japan Polyethylene Corporation): 35 parts by mass
- Calcium carbonate (Whiten H, produced by Shiraishi Kogyo): 10 parts by mass
- Titanium dioxide (Ti Pure R-108, produced by Du Pont Kabushiki Kaisha): 30 parts by mass
- Foaming agent (Vinyfor AC #3, produced by Eiwa Chemical Ind. Co., Ltd.): 4.0 parts by mass
- Foaming auxiliary (MFX-50E, produced by Daikyo Kasei Kogyo Co, Ltd.): 4.0 parts by mass

### Example 2

Foamed wallpaper was produced in the same manner as in Example 1, except that 65 parts by mass of EMA (Rexpearl EB440H, produced by Japan Polyethylene Corporation) was used in place of 65 parts by mass of EVA.

### Example 3

Foamed wallpaper was produced in the same manner as in Example 1, except that 65 parts by mass of EMMA (Acryft WH401, produced by Sumitomo Chemical Co., Ltd.) was used in place of 65 parts by mass of EVA.

### Example 4

Foamed wallpaper was produced in the same manner as in Example 1, except for changing the formulation ratio of EVA:EMAMAH = 65:35 (mass ratio) to EVA:EMAMAH = 90:10 (mass ratio).

### Example 5

Foamed wallpaper was produced in the same manner as in Example 1, except for changing the formulation ratio of EVA:EMAMAH = 65:35 (mass ratio) to EVA:EMAMAH = 80:20 (mass ratio).

### Example 6

Foamed wallpaper was produced in the same manner as in Example 1, except for changing the formulation ratio of EVA:EMAMAH = 65:35 (mass ratio) to EVA:EMAMAH = 50:50 (mass ratio).

### Example 7

Foamed wallpaper was produced in the same manner as in Example 1, except for changing the formulation ratio of EVA:EMAMAH = 65:35 (mass ratio) to EVA:EMAMAH = 40:60 (mass ratio).

### Example 8

Foamed wallpaper was produced in the same manner as in Example 1, except that 85 parts by mass of EVA (Evaflex P1007: produced by Mitsui/Du Pont Polychemical K.K.) and 15 parts by mass of EMAMAH (Modic M114, produced by Mitsubishi Chemical Corporation) were used as resin components in place of 65 parts by mass of EVA (Evaflex EV450) and 35 parts by mass of EMAMAH (Rexpearl ET440H).

### Example 9

Foamed wallpaper was produced in the same manner as in Example 1, except that 90 parts by mass of EVA (Evaflex P1007, produced by Mitsui/Du Pont Polychemical K.K.) and 10 parts by mass of EMAMAH (Modic M114, produced by Mitsubishi Chemical Corporation) were used as resin components in place of 65 parts by mass of EVA (Evaflex EV450) and 35 parts by mass of EMAMAH (Rexpearl ET440H).

### Comparative Example 1

Foamed wallpaper was produced in the same manner as in Example 1, except for changing the formulation ratio of EVA:EMAMAH = 65:35 (mass ratio) to EVA:EMAMAH = 0:100 (mass ratio) (that is, EMAMAH alone was used as a resin component).

### Comparative Example 2

Foamed wallpaper was produced in the same manner as in Example 1, except for changing the formulation ratio of EVA:EMAMAH = 65:35 (mass ratio) to EVA:EMAMAH = 100:0 (mass ratio) (that is, EVA alone was used as a resin component).

### Comparative Example 3

Foamed wallpaper was produced in the same manner as in Example 1, except that EMAA (Nucrel N1560, produced by Mitsui Du Pont Chemical Co., Ltd.; MFR=60, MAA=15 mass%) was used in place of EMAMAH, and the formulation ratio of EVA:EMAA = 80:20 (mass ratio) was used.

### Test Example 1

The scratch resistance, background following properties, and foamability of the foamed wallpaper produced in the Examples and Comparative Examples were examined. The evaluation criteria of each test method are as follows.

### Scratch Resistance

The foamed wallpaper was subjected to a five-times-back-and-forth scratch test according to the surface-enhancing test (Japan Vinyl Goods Mfrs. Ass.) using a 200 g load, and rated as follows.
5: No or slight resin fuzzing was observed at the scratch mark.
4: Fuzzing was observed at the scratch mark, but no dents were observed in the foamed resin layer.
3: Fuzzing was observed at the scratch mark, and dents were observed in the foamed resin layer.
2: More significant fuzzing at the scratch mark and dents in the foamed resin layer were observed than in 3, but the backing paper was not exposed.
1: Significant fuzzing was observed at the scratch mark, and the backing paper was exposed.

2 to 5 were deemed as passing (5 is the highest).

### Background Following Properties

The sides (sides with a 2.5 cm length) of two pieces of adhesive board paper (2.5 cm x 4.0 cm, thickness: 0.7 mm) were pressed together, and the backing paper surface side of the foamed wallpaper was applied to the adhesive board paper. The foamed wallpaper was cut to fit the size of the board paper to form a test piece. (Specifically, the foamed wallpaper was applied to the board paper in such a manner that the vertical direction against the width of the foamed wallpaper was parallel to the pressed sides.)

Subsequently, the test piece was pulled at a rate of 3 mm/min using a tension testing machine in the vertical direction relative to the pressed sides of the board paper of the test piece, and the appearance obtained when a 2.0 mm space appeared was observed. The evaluation criteria are as follows.
5: No appearance change was observed.
4: No cracks (holes) were observed, but slight luster change and/or whitening was observed.
3: Partial cracks (holes) were observed.
2: More cracks (holes) than in 3 were observed, but no fracture was observed.
1: Fracture was observed.

2 to 5 were deemed as passing (5 is the highest).

### Foamability

The expansion ratio of the foamed wallpaper was calculated, and rated as follows.
5: Foamed wallpaper having an expansion ratio of 10 or more.
4: Foamed wallpaper having an expansion ratio of 7 or more and less than 10.
3: Foamed wallpaper having an expansion ratio of 5 or more to less than 7.
2: Foamed wallpaper having an expansion ratio of 3 or more to less than 5.
1: Foamed wallpaper having an expansion ratio of less than 3.

The expansion ratio was calculated from the following formula:
Expansion ratio = (Thickness after foaming - thickness of backing paper)/(thickness before foaming - thickness of backing paper).

2 to 5 were deemed as passing (5 is the highest).

The results are shown in Tables 1 and 2 below.

**Table 1**

| | Ex.1 | Ex.2 | Ex.3 | Ex.4 | Ex.5 | Ex.6 | Ex.7 | Ex.8 | Ex.9 |
|---|---|---|---|---|---|---|---|---|---|
| Scratch resistance | 4 | 4 | 4 | 2 | 3 | 4 | 5 | 4 | 3 |
| Background following property | 4 | 4 | 4 | 5 | 5 | 3 | 3 | 3 | 3 |
| Foamability | 4 | 4 | 4 | 4 | 4 | 4 | 3 | 3 | 3 |

**Table 2**

| | Comparative Example 1 | Comparative Example 2 | Comparative Example 3 |
|---|---|---|---|
| Scratch resistance | 5 | 1 | 5 |
| Background following property | 1 | 5 | 1 |
| Foamability | 1 | 4 | 1 |

## Claims

1. A laminate sheet comprising at least a foaming-agent-containing resin layer on a substrate,
(1) the foaming-agent-containing resin layer comprising an ethylene copolymer, and an olefin copolymer comprising at least an α,β unsaturated carboxylic acid anhydride as a constituent monomer,
(2) the ethylene copolymer being at least one member selected from the group consisting of ethylene-α,β unsaturated carboxylic acid ester copolymers and ethylene-carboxylic acid vinyl ester copolymers, and
(3) the foaming-agent-containing resin layer being crosslinked.

2. The laminate sheet according to claim 1, wherein the ethylene copolymer is contained in an amount of 50 to 80 mass% and the olefin copolymer is contained in an amount of 20 to 50 mass% in 100 mass% of resin components of the foaming-agent-containing resin layer.

3. The laminate sheet according to claim 1 or 2, wherein a comonomer component other than ethylene in the ethylene copolymer is at least one member selected from the group consisting of vinyl acetate, methyl acrylate, and methyl methacrylate.

4. The laminate sheet according to any one of claims 1 to 3, wherein the foaming-agent-containing resin layer is crosslinked by electron beam irradiation.

5. The laminate sheet according to any one of claims 1 to 4, wherein a non-foamed resin layer B, the foaming-agent-containing resin layer, and a non-foamed resin layer A are formed on the substrate in this order.

6. A foamed laminate sheet obtained by foaming the foaming-agent-containing resin layer of the laminate sheet according to any one of claims 1 to 5.

7. The foamed laminate sheet according to claim 6, wherein embossing is done from an uppermost surface layer.
